# EUROPEAN PATENT APPLICATION

(11) **EP 4 763 009 A1**
(43) Date of publication of application: **24.06.2026**
(21) Application number: 25190103.9
(22) Date of filing: 17.07.2025
(51) Int. Cl.: A47J 31/46, A47J 31/52, A47J 31/54

(54) **BEVERAGE MACHINE AND METHOD FOR BREWING BEVERAGE**

(30) Priority: 19.12.2024 CN 202411885577
(71) Applicant: Kalerm Technology (Suzhou) Co., Ltd, Suzhou Jiangsu 215134 (CN)
(72) Inventor: YU, Ningchao, Suzhou 215134 (CN); DUAN, Ruwang, Suzhou 215134 (CN); WANG, Baowei, Suzhou 215134 (CN)
(74) Representative: Murgitroyd & Company

(57) **Abstract**

A beverage machine includes: a beverage distribution pipeline connected between a beverage dispensing outlet and a brewing chamber of a brewer for preparing a brewing beverage; a heat exchanger provided with a heat exchange channel, a portion of the beverage distribution pipeline passing through the heat exchanger, the heat exchange channel surrounding the beverage distribution pipeline, the beverage distribution pipeline being fluidly isolated from but thermally in contact with the heat exchange channel, and the heat exchange channel being provided with a channel inlet connected to a first pipeline and a second pipeline; and a controller. The controller, in response to an adjustment signal characterizing an output beverage temperature, controls selective connection between the channel inlet and either the first pipeline or the second pipeline, to heat or cool the brewing beverage. The beverage machine provides heat exchange for the beverage distribution pipeline, to quickly prepare beverages at different temperatures.

## Description

### TECHNICAL FIELD

The present invention relates to the field of beverage preparation technologies, and in particular, to a beverage machine and a method for brewing a beverage.

### BACKGROUND

In the existing field of beverage preparation, the application of beverage machines in household and commercial scenes has become increasingly wide. For example, the beverage machines are designed to mix coffee granules, tea granules and the like with water at a proper temperature, so as to generate beverages for users to drink. However, user 's demands for beverage temperature are becoming more and more diverse. For example, in summer, users prefer to quickly make iced coffee or cold-brewed beverages, while in winter, hot beverages with a high initial temperature for the first serving need to be provided

Traditional beverage machines mostly adopt simple heating and brewing processes. While capable of meeting fundamental beverage preparation needs, the beverage machines often fall short in achieving accurate temperature control and energy saving. For example, water temperature control in beverage machines usually depends on a single heater or a thermostat system, which leads to relatively large temperature fluctuations during brewing, resulting in an inconsistent beverage taste and negatively impacting user experience. In addition, due to the lack of an efficient heat exchange device, some beverage machines have relatively high energy consumption when making high-temperature or low-temperature beverages, failing to meet efficient transitions between different temperature requirements.

In response to market demands, some beverage machines attempt to achieve cooling effects using a method for extending beverage pipelines and immersing the beverage pipelines in a cooling water tank. While capable of reducing beverage temperature to some extent, this method has a relatively large limitation, failing to meet requirements of modern users for efficiency and quality.

In addition, heating and cooling functions in beverage machines are generally incompatible, requiring separate heating and cooling modules. This results in an increased device volume, expensive production costs and inefficient functional switching. Furthermore, it is difficult to effectively solve a problem of insufficient initial temperature for the first serving of hot beverages, which is particularly obvious in winter when users start beverage machines for the first time.

### SUMMARY

The present invention aims to provide a beverage machine that is low in cost and capable of delivering beverages at temperatures that satisfy requirements of users.

To achieve the above objects, the present invention provides a beverage machine, including: a beverage distribution pipeline connected between a beverage dispensing outlet and a brewing chamber of a brewer for preparing a brewing beverage, for delivering the brewing beverage to the beverage dispensing outlet; a heat exchanger, the heat exchanger being provided with a heat exchange channel, a portion of the beverage distribution pipeline passing through the heat exchanger, the heat exchange channel surrounding the portion of the beverage distribution pipeline, the portion of the beverage distribution pipeline being fluidly isolated from but thermally in contact with the heat exchange channel, the heat exchange channel being provided with a channel inlet and a channel outlet, and the channel inlet being connected to a first pipeline and a second pipeline; and a controller, where the controller, in response to an adjustment signal characterizing an output beverage temperature, controls selective connection between the channel inlet and either the first pipeline or the second pipeline, thereby enabling the heat exchange channel to selectively introduce either a heating source through the first pipeline or a cooling source through the second pipeline, to dispense the brewing beverage heated by the heating source in the heat exchange channel or the brewing beverage cooled by the cooling source in the heat exchange channel at the beverage dispensing outlet.

Compared with the prior art, the present invention has the following beneficial effects: a temperature of a beverage flowing out from the beverage distribution pipeline is adjusted by controlling selective on-off of the first pipeline and the second pipeline. The beverage machine may provide heat exchange for the beverage distribution pipeline, so that a beverage with different temperature requirements may be quickly prepared. For example, a hot beverage is reheated to form a high-temperature beverage, and a hot beverage is cooled to form a low-temperature beverage, thereby achieving temperature-adjustable beverage output, so as to meet different scene requirements and improve drinking experience.

As a further improvement of an embodiment of the present invention, the beverage machine further includes a heater connected to a water supply, where an end of the first pipeline is connected to the heater, and another end of the first pipeline is connected to the channel inlet; water from the water supply is delivered into the heater for heating, and heated water is delivered as the heating source into the heat exchange channel through the first pipeline; preferably, a first water pump is provided between the water supply and the heater, and the first water pump is configured to supply the water into the heater.

As a further improvement of an embodiment of the present invention, the beverage machine further includes a brewing water supply pipeline connected to the brewer and leading to the brewing chamber, for supplying brewing water to the brewing chamber, where the heater is connected between the water supply and the brewing water supply pipeline, and the end of the first pipeline is connected to the heater through the brewing water supply pipeline; and the first pipeline is provided with a first three-way valve, the first three-way valve includes a first inlet, a first outlet and a second outlet, the first inlet is connected to the brewing water supply pipeline, the first outlet is connected to the channel inlet, the second outlet is connected to either the beverage dispensing outlet or an independent hot water outlet, and the first inlet is selectively connected to either the first outlet or the second outlet.

As a further improvement of an embodiment of the present invention, the second pipeline is connected between a water supply and the channel inlet, water from the water supply is delivered as the cooling source into the heat exchange channel through the second pipeline; preferably, the second pipeline is provided with a second water pump, and the second water pump is configured to supply the water into or pressurize the heat exchange channel.

As a further improvement of an embodiment of the present invention, the beverage machine further includes a refrigeration module and a cooling water tank, where the cooling source is accommodated in the cooling water tank, the refrigeration module is configured to cool the cooling water tank, the second pipeline is provided with a second water pump, the second pipeline is connected between the cooling water tank and the channel inlet, a return pipe is provided between the cooling water tank and the channel outlet, and the cooling source, under an action of the second water pump, circulates between the heat exchange channel and the cooling water tank through the second pipeline and the return pipe; preferably, a second pipe joint is provided between the channel outlet and the cooling water tank, the second pipe joint includes a first input port, a first output port and a second output port, the first input port is connected to the channel outlet, the first output port is connected to the return pipe, and the second output port is connected to a wastewater outlet; and a cutoff valve is provided between the second output port and the wastewater outlet, and when the heating source in the first pipeline is introduced into the heat exchange channel, the cutoff valve opens to connect the second output port to the wastewater outlet.

As a further improvement of an embodiment of the present invention, the beverage machine further includes a brewing water supply pipeline connected to the brewer and leading to the brewing chamber, for supplying brewing water to the brewing chamber,

wherein a circulation water loop is provided between the channel outlet and the brewer, and the controller, in response to a cleaning signal, controls the heating source or the cooling source in the heat exchange channel to be delivered into the brewing water supply pipeline through the circulation water loop; preferably, the second pipeline is connected between a water supply and the channel inlet, the second pipeline is provided with a second water pump, the controller selectively controls disconnection between the second water pump and the water supply, and controls the second water pump to pressurize the heat exchange channel.

As a further improvement of an embodiment of the present invention, the circulation water loop includes a circulation pipe and a water storage tank connected in series to the circulation pipe, and the heating source or the cooling source discharged from the heat exchange channel is stored in the water storage tank.

As a further improvement of an embodiment of the present invention, the circulation water loop includes a circulation pipe, the circulation pipe is provided with a second three-way valve, a first port and a second port of the second three-way valve are connected to the channel outlet and the brewing water supply pipeline, respectively, and a third port of the second three-way valve is connected to a wastewater outlet; an end of the circulation pipe is connected to the channel outlet, and another end of the circulation pipe is connected to the brewing water supply pipeline; and the second three-way valve selectively connects the circulation water loop to either the brewing water supply pipeline or the wastewater outlet .

As a further improvement of an embodiment of the present invention, the portion of the beverage distribution pipeline passing through the heat exchanger is constructed as a metal pipe section, the heat exchanger includes a pipe sleeve, and an inlet joint and an outlet joint respectively connected to two ends of the pipe sleeve, the pipe sleeve is sleeved on an outer side of the metal pipe section, the heat exchange channel is disposed between the pipe sleeve and the metal pipe section, the channel inlet is provided at the inlet joint, and the channel outlet is provided at the outlet joint; and the channel outlet selectively connects to a wastewater outlet, to discharge the heating source or the cooling source.

The present invention further provides a method for brewing a beverage, applied to the above beverage machine. The method includes: receiving an adjustment signal characterizing an output beverage temperature; in a case that the adjustment signal is a heating signal, controlling a heating source to be supplied into the heat exchange channel through the first pipeline, to dispense a brewing beverage heated by the heating source in the heat exchange channel at the beverage dispensing outlet; and in a case that the adjustment signal is a cooling signal, controlling a cooling source to be supplied into the heat exchange channel through the second pipeline, to dispense a brewing beverage cooled by the cooling source in the heat exchange channel at the beverage dispensing outlet.

As a further improvement of an embodiment of the present invention, the heating signal is triggered by at least one of following features: preparation of a first cup of a high-temperature beverage after startup of the beverage machine when an ambient temperature is below a preset ambient temperature; exceeding a preset time period after output of a previous cup of a high-temperature beverage; preparation of a first cup of a high-temperature beverage following output of a cold-extracted beverage; and a temperature of a beverage brewed by the brewing chamber of the brewer being below a target temperature required for a high-temperature beverage; and/or the cooling signal is triggered by at least one of following features: current preparation of a low-temperature beverage; preparation of a first cup of a cold-extracted beverage following output of a high-temperature beverage; and a temperature of a beverage brewed by the brewing chamber of the brewer being above a target temperature required for a cold-extracted beverage.

As a further improvement of an embodiment of the present invention, the controlling the heating source to be supplied into the heat exchange channel through the first pipeline includes: controlling a first water pump upstream of a heater to start, to supply water to the heater; controlling the heater to heat the water, to form the heating source; and controlling a first three-way valve on the first pipeline to open a port leading to the heat exchange channel, such that the heating source enters the heat exchange channel.

As a further improvement of an embodiment of the present invention, the controlling the cooling source to be supplied into the heat exchange channel through the second pipeline includes: controlling a first three-way valve on the first pipeline to cut off a port leading to the heat exchange channel; and controlling a second water pump on the second pipeline to start, such that water serving as the cooling source from a water supply or a cooling water tank enters the heat exchange channel through the second pipeline.

As a further improvement of an embodiment of the present invention, the method further includes: controlling a three-way valve on a brewing water supply pipeline to cut off a port leading to the brewer; controlling a second water pump to start, such that the heating source or the cooling source in the heat exchange channel enters the brewing chamber of the brewer through a circulation water loop; and controlling a pressure relief valve of the brewer to open, such that the heating source or the cooling source in the brewing chamber is discharged; where the controlling the second water pump to start, such that the heating source or the cooling source in the heat exchange channel enters the brewing chamber of the brewer through the circulation water loop includes: controlling a first three-way valve on the first pipeline to cut off a port leading to the heat exchange channel, and controlling the first three-way valve to open a port leading to either the beverage dispensing outlet or an independent hot water outlet, the first pipeline being connected to the second pipeline; controlling disconnection between the second pipeline and a water supply, and controlling disconnection between the first pipeline and the brewing water supply pipeline; and controlling the second water pump to start, to pressurize the heat exchange channel, such that the heating source or the cooling source in the heat exchange channel enters the brewing chamber through the circulation water loop, or the controlling the second water pump to start, such that the heating source or the cooling source in the heat exchange channel enters the brewing chamber of the brewer through the circulation water loop includes: controlling a second three-way valve on the circulation water loop to cut off a port leading to the brewer, and controlling the second three-way valve on the circulation water loop to open a port leading to a wastewater outlet; controlling the second water pump to start, such that a portion of the heating source or a portion of the cooling source in the heat exchange channel is discharged from the wastewater outlet through the circulation water loop; and controlling the second three-way valve on the circulation water loop to cut off the port leading to the wastewater outlet, and controlling the second three-way valve on the circulation water loop to open the port leading to the brewer, such that another portion of the heating source or another portion of the cooling source in the heat exchange channel enters the brewing chamber through the circulation water loop.

As a further improvement of an embodiment of the present invention, in the case that the adjustment signal is the heating signal, the method further includes: controlling the heating source in the heat exchange channel to enter the brewing chamber of the brewer through a circulation water loop; and controlling a pressure relief valve of the brewer to open, to discharge the heating source in the brewing chamber, and in the case that the adjustment signal is the cooling signal, the method further includes: controlling a second water pump on the second pipeline to start, such that the cooling source entering the heat exchange channel enters the brewing chamber through a circulation water loop; and controlling a pressure relief valve of the brewer to open, to discharge the cooling source in the brewing chamber.

### BRIEF DESCRIPTION OF THE DRAWINGS

FIG. 1 is a schematic diagram of a beverage machine according to an embodiment of the present invention.
FIG. 2 is a three-dimensional schematic diagram of a heat exchanger of the beverage machine in FIG. 1.
FIG. 3 is a sectional schematic diagram of the heat exchanger in FIG. 2.
FIG. 4 is a schematic diagram of another structural form of the beverage machine in FIG. 1.
FIG. 5 is a schematic diagram of yet another structural form of the beverage machine in FIG. 1.
FIG. 6 is a schematic diagram of still yet another structural form of the beverage machine in FIG. 1.
FIG. 7 is a flowchart of a method for brewing a beverage according to an embodiment of the present invention.
FIG. 8 is a flowchart of an example of the method for brewing the beverage in FIG. 7.
FIG. 9 is a flowchart of another example of the method for brewing the beverage in FIG. 7.
The repeated use of reference numerals in this specification and the drawings is intended to represent the same or similar features or elements of the present invention.

### DETAILED DESCRIPTION OF THE EMBODIMENTS

The present invention will be described in detail below with reference to specific embodiments shown in the drawings. However, these embodiments are not intended to limit the present invention, and the structures, methods, or functions provided by a person skilled in the art according to these embodiments are all included in the protection scope of the present invention.

It should be understood that terms such as "above", "upper", "below" and "lower", used herein to indicate relative spatial positions, are employed for purposes of facilitating description of a relationship between a unit or feature and another unit or feature shown in the drawings. The terms used to describe the relative spatial positions may be intended to include different orientations of a device in use or operation, other than the orientations shown in the drawings.

As used herein, terms "first", "second" and "third" may be used interchangeably to distinguish a component from another component, and these terms are not intended to represent positions or importance of various components. Terms "upstream" and "downstream" refer to a relative direction of a fluid flow in a fluid pathway. For example, the term "upstream" refers to a direction from which the fluid flow originates, and the term "downstream" refers to a direction towards which the fluid flows.

A beverage machine in a specific embodiment of the present invention is described by taking a coffee machine as an example.

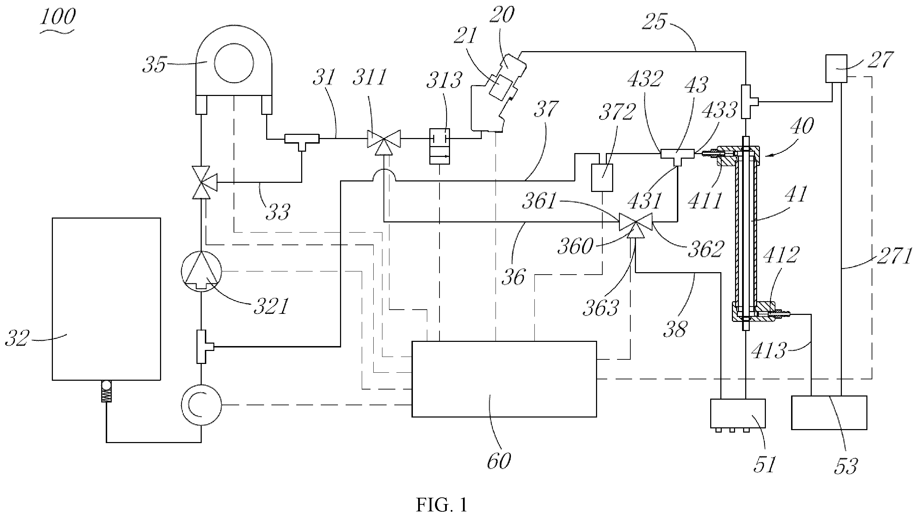

Referring to FIG. 1, a beverage machine 100 includes a brewer 20, a brewing water supply pipeline 31, a beverage distribution pipeline 25, and a heater 35. The brewer 20 has a brewing chamber 21 for accommodating beverage granules and a brewing outlet for outputting a brewing beverage, and the beverage granules may be filled into the brewing chamber 21. The brewing water supply pipeline 31 is connected to the brewer 20 and leads to the brewing chamber 21 for supplying brewing water into the brewing chamber 21, and the brewing water is delivered into the brewing chamber 21 for extracting the beverage granules, so as to form a beverage. The beverage distribution pipeline 25 is connected between the brewing outlet and a beverage dispensing outlet 51 for delivering the extracted beverage to the beverage dispensing outlet 51. The heater 35 is connected between a water supply 32 and the brewing water supply pipeline 31, the brewing water supply pipeline 31 is connected to the water supply 32 through the heater 35, the heater 35 is used for heating water to a proper temperature, and the water heated by the heater 35 may be supplied into the brewing chamber 21 through the brewing water supply pipeline 31.

Further, the beverage machine 100 further includes a heat exchanger 40, the heat exchanger 40 is provided with a heat exchange channel 41, a portion of the beverage distribution pipeline 25 passes through the heat exchanger 40, the heat exchange channel 41 surrounds the beverage distribution pipeline 25, the beverage distribution pipeline 25 is fluidly isolated from but thermally in contact with the heat exchange channel 41, the heat exchange channel 41 is provided with a channel inlet 411 and a channel outlet 412, a first pipeline 36 (also known as a high-temperature pipeline) is provided between the channel inlet 411 and the heater 35, and the channel inlet 411 is further connected to a second pipeline 37 (also known as a low-temperature pipeline). The beverage machine 100 further includes a controller 60, the controller 60, in response to an adjustment signal characterizing an output beverage temperature, controls selective connection between the channel inlet 411 and either the high-temperature pipeline 36 or the low-temperature pipeline 37, thereby enabling the heat exchange channel 41 to selectively introduce either a heating source through the high-temperature pipeline 36 or a cooling source through the low-temperature pipeline 37, so as to heat the brewing beverage or cool the brewing beverage.

The heating source in the high-temperature pipeline 36 has a higher temperature than the cooling source in the low-temperature pipeline 37.

The beverage distribution pipeline 25 is fluidly isolated from the heat exchange channel 41, that is, there is no direct liquid connection between the two. However, through the use of good thermal conductive materials and optimized structural design, a beverage in the beverage distribution pipeline 25 can effectively exchange heat with the heating source or the cooling source in the heat exchange channel 41. The design of the heat exchanger 40 can significantly improve heat exchange efficiency, ensure that a beverage reaches a desired temperature, and reduce energy waste during a heating process.

A temperature of the beverage flowing out from the beverage distribution pipeline 25 is adjusted by controlling selective on-off of the high-temperature pipeline 36 and the low-temperature pipeline 37. In the beverage machine 100, heat exchange may be provided for the beverage distribution pipeline 25, so that a beverage with different temperature requirements can be quickly prepared. A hot beverage is reheated to form a high-temperature beverage, or a hot beverage is cooled to form a low-temperature beverage, so that temperature-adjustable beverage output is achieved, thereby meeting different scene requirements.

In addition, the brewing water supply pipeline 31 is provided with a three-way valve 311, and a port of the three-way valve 311 is connected to the high-temperature pipeline 36, so that the three-way valve 311 can selectively control connection and disconnection between the brewing water supply pipeline 31 and the high-temperature pipeline 36. The channel outlet 412 may be directly connected to a wastewater outlet 413, and water serving as the heating source or the cooling source in the heat exchange channel 41 may be directly discharged through the wastewater outlet 413, for example, into a water-receiving tray 53. An emptying pump 27 is provided on the beverage distribution pipeline 25, an emptying pipeline 271 is provided between the emptying pump 27 and the water-receiving tray 53, and after beverage output is completed in the brewer 20, the emptying pump 27 may start to deliver residual liquid in the beverage distribution pipeline 25 to the water-receiving tray 53 through the emptying pipeline 271.

In some embodiments, the low-temperature pipeline 37 is connected between the water supply 32 and the channel inlet 411. An end of the high-temperature pipeline 36 is connected to the brewing water supply pipeline 31, and another end of the high-temperature pipeline 36 is connected to the channel inlet 411. Low-temperature water from the water supply 32 may be delivered into the heater 35 and/or the low-temperature pipeline 37. The low-temperature water from the water supply 32 may be used both as a water source for preparing a beverage and as the cooling source for cooling a beverage. The low-temperature water from the water supply 32 may also be supplied into the heater 35, and the low-temperature water is heated to form hot water or steam, thereby forming the aforementioned heating source.

Both the heater 35 and the low-temperature pipeline 37 may be supplied with water through the water supply 32. Under an action of the heater 35, the water is heated to a required high temperature to form the heating source and is delivered into the high-temperature pipeline 36, while the low-temperature water from the water supply 32 may be directly used as the cooling source and is delivered into the low-temperature pipeline 37, so that the heating source or the cooling source is provided for the heat exchange channel 41. This enables heating or cooling of liquid in the beverage distribution pipeline 25 without adding an additional water supply, thereby avoiding an increase in a volume of the beverage machine 100. The water supply 32 may be a built-in water tank integrated within the beverage machine 100, or may be an externally connected bottled water source, or may be an externally connected municipal water pipeline.

A first water pump 321 is provided between the water supply 32 and the heater 35, the first water pump 321 is configured to deliver water from the water supply 32 into the heater 35, and the water heated by the heater 35 may be delivered into the brewing chamber 21 through the brewing water supply pipeline 31. Hot water in the brewing water supply pipeline 31 may be delivered into the heat exchange channel 41 through the high-temperature pipeline 36. The hot water serves as the heating source in the heat exchange channel 41 to exchange heat with the beverage distribution pipeline 25, thereby increasing a temperature of a beverage in the beverage distribution pipeline 25. More preferably, the water supplied into the heater 35 by the first water pump 321 may be heated into steam, and the steam is delivered into the heat exchange channel 41 through the brewing water supply pipeline 31 and the high-temperature pipeline 36. The steam is used as the heating source in the heat exchange channel 41, so that heating efficiency is higher, and there is no waste of water resources due to a fact that only a small amount of condensate is produced after the steam condenses. The low-temperature water from the water supply 32 may be delivered into the heat exchange channel 41 through the low-temperature pipeline 37. The low-temperature water serves as the cooling source in the heat exchange channel 41 to exchange heat with the beverage distribution pipeline 25, thereby reducing a temperature of a beverage in the beverage distribution pipeline 25.

The aforementioned high temperature and low temperature are only relatively speaking, i.e., the low temperature is lower than the high temperature. For example, a temperature of a beverage extracted from normal hot water ranges from 80 degrees to 98 degrees, such as 90 degrees, which may be considered as a high-temperature beverage. However, a temperature of a low-temperature beverage mentioned herein ranges from 30 degrees to 45 degrees, such as 40 degrees. Therefore, compared to a beverage extracted from hot water, a beverage at 30 degrees to 45 degrees is the low-temperature beverage.

In some embodiments, the steam from the heater 35 is first delivered into the heat exchange channel 41 through the high-temperature pipeline 36, and then the hot water from the heater 35 is supplied into the brewing chamber 21 through the brewing water supply pipeline 31, that is, the heating source supplied into the heat exchange channel 41 and the hot water supplied into the brewing chamber 21 are heated by a same heater 35.

In some other embodiments, an additional water pump and an additional heater may also be provided, in conjunction with the first water pump 321 and the heater 35, to respectively provide the heating source for the heat exchange channel 41 and the hot water for the brewing chamber 21, so that the heating source provided for the heat exchange channel 41 may be the steam or the hot water. Moreover, beverage preparation and heating may be carried out simultaneously, so as to ensure beverage preparation efficiency.

Referring further to FIG. 1, the high-temperature pipeline 36 is provided with a first three-way valve 360, the first three-way valve 360 includes a first inlet 361, a first outlet 362 and a second outlet 363, the first inlet 361 is connected to the brewing water supply pipeline 31, the first outlet 362 is connected to the channel inlet 411, the second outlet 363 is connected to the beverage dispensing outlet 51 or an independent hot water outlet, and the first inlet 361 is selectively connected to either the first outlet 362 or the second outlet 363. A hot water pipeline 38 is connected between the second outlet 363 and either the beverage dispensing outlet 51 or the independent hot water outlet for outputting hot water to the beverage dispensing outlet 51 or the independent hot water outlet.

When the adjustment signal characterizing the output beverage temperature is a heating signal, for example, when a beverage in the beverage distribution pipeline 25 is to be heated, the controller 60 regulates the first three-way valve 360 to connect the first inlet 361 to the first outlet 362, so that steam may be introduced into the heat exchange channel 41 to transfer heat to a beverage in the beverage distribution pipeline 25, thereby ensuring that a temperature of a beverage can reach a target temperature required for a high-temperature beverage. When the hot water needs to be output, the controller 60 regulates the first three-way valve 360 to connect the first inlet 361 to the second outlet 363, so that the hot water may be output from the high-temperature pipeline 36 to the beverage dispensing outlet 51 or the independent hot water outlet. The hot water is output through the independent hot water outlet, so that beverage preparation efficiency may be improved, for example, the hot water and the beverage are output simultaneously.

The first three-way valve 360 is provided to deliver hot water from the brewing water supply pipeline 31 into either the beverage dispensing outlet 51 or the independent hot water outlet, so that users can conveniently take the hot water or prepare a specific beverage, such as American coffee. Disposal of the high-temperature pipeline 36 and the first three-way valve 360 simplifies an arrangement of pipelines, thereby making an overall pipeline system of the beverage machine 100 more compact. In addition, connection between the first inlet 361 and the second outlet 363 allows output of hot water based on the heater 35, and connection between the first inlet 361 and the first outlet 362 allows output of steam based on the heater 35. Using the steam as the heating source for the heat exchange channel 41 achieves high heat exchange efficiency, so that a temperature of a beverage output through the beverage distribution pipeline 25 can be quickly improved, and waste of water resources is reduced.

In some embodiments, the first water pump 321 is provided between the water supply 32 and the heater 35, and the first water pump 321 is configured to supply water to the heater 35; and the low-temperature pipeline 37 is provided with a second water pump 372, and the second water pump 372 is configured to supply water into or pressurize the heat exchange channel 41.

The first water pump 321 and the second water pump 372 independently control supply of water to the heater 35 and supply of low-temperature water to the heat exchange channel 41. When the beverage distribution pipeline 25 needs to be cooled, the second water pump 372 can quickly provide the low-temperature water serving as the cooling source for the heat exchange channel 41, thereby improving cold-heat conversion efficiency. Meanwhile, disposal of the second water pump 372 may enable the first water pump 321 to be specially used for beverage extraction without any diversion, thereby ensuring beverage extraction efficiency, thus allowing the beverage machine 100 to complete preparation of a low-temperature beverage in a relatively short time.

The second water pump 372 is constructed as a diaphragm pump, and the diaphragm pump has a strong self-suction capacity and does not require manual water priming during liquid suction. The diaphragm pump operates through reciprocating deformation of a diaphragm, which changes a volume to draw in and discharge liquid. When the diaphragm pump draws in the liquid, movement of the diaphragm creates a negative pressure inside a chamber of the diaphragm pump, causing the liquid or gas to be sucked in through an inlet. When the diaphragm pump discharges the liquid, movement of the diaphragm creates a positive pressure inside a chamber of the diaphragm pump, causing the liquid or the gas to be expelled through an outlet. Installing the diaphragm pump on the low-temperature pipeline 37 may ensure more reliable delivery of low-temperature water into the heat exchange channel 41.

In addition, a bypass pipeline 33 is connected between an upstream side of the heater 35 and a downstream side of the heater 35, and the bypass pipeline 33 allows water from the water supply 32 to bypass the heater 35 and to be supplied into the brewing water supply pipeline 31, so that low-temperature water may be provided for the brewing chamber 21 to extract a beverage, and then the beverage distribution pipeline 25 may directly output a cold-extracted beverage extracted from normal-temperature water. The low-temperature water herein is also relative to a high-temperature water, i.e., the low-temperature water has a lower temperature than the high-temperature water. For example, a temperature of a beverage extracted from normal hot water ranges from 80 degrees to 98 degrees, such as 90 degrees, which may be considered as a high-temperature beverage. However, the cold-extracted beverage herein is a beverage extracted from the normal-temperature water, which has a temperature ranging from 10 degrees to 25 degrees, such as 25 degrees. Therefore, compared to a beverage extracted from hot water, the cold-extracted beverage extracted from the normal-temperature water is a beverage at a lower temperature.

In some embodiments, a first pipe joint 43 is provided at the channel inlet 411, the first pipe joint 43 includes a first liquid inlet 431, a second liquid inlet 432 and a liquid outlet 433, the first liquid inlet 431 is connected to the high-temperature pipeline 36, the second liquid inlet 432 is connected to the low-temperature pipeline 37, and the liquid outlet 433 is connected to the channel inlet 411. The high-temperature pipeline 36 introduces the heating source into the heat exchange channel 41 through the first liquid inlet 431, and the heating source is hot water or steam. The low-temperature pipeline 37 introduces the cooling source into the heat exchange channel 41 through the second liquid inlet 432, and the cooling source is low-temperature water.

The provision of the first pipe joint 43 facilitates connection of the high-temperature pipeline 36 and the low-temperature pipeline 37 to the heat exchanger 40. This effectively realizes diversion and control of cold and hot water flows, thereby ensuring that hot water and cold water may be independently and accurately delivered into the heat exchange channel 41.

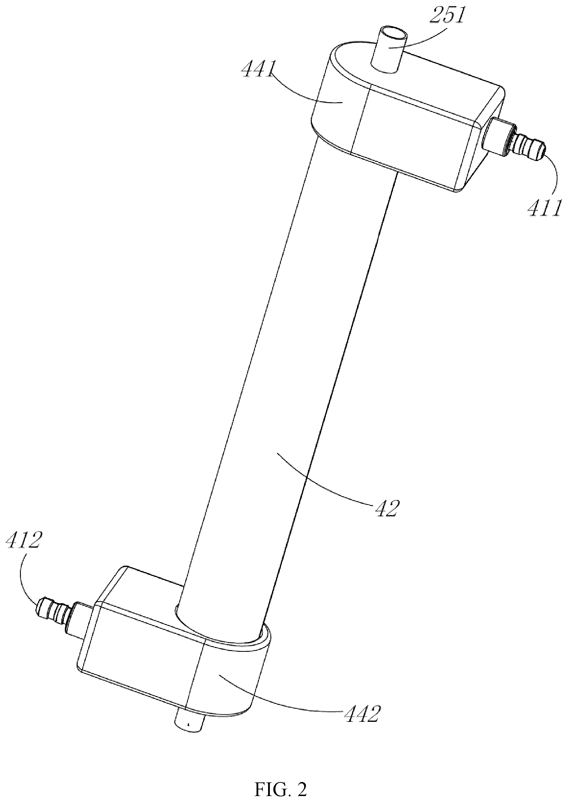

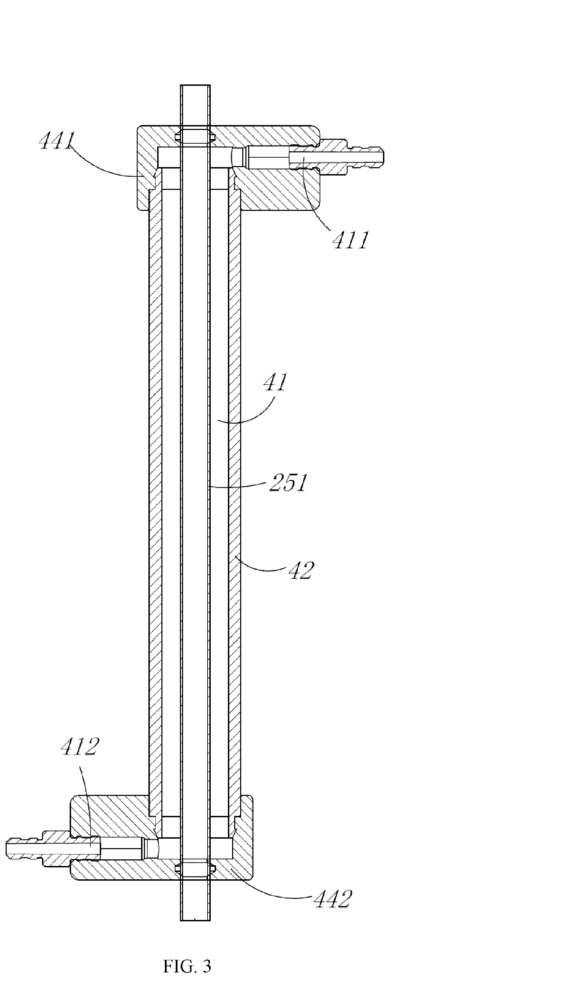

Referring to FIG. 2 and FIG. 3, the beverage distribution pipeline 25 includes a metal pipe section 251, and a portion of the beverage distribution pipeline 25 passing through the heat exchanger 40 is constructed as the metal pipe section 251. The heat exchanger 40 includes a pipe sleeve 42, and an inlet joint 441 and an outlet joint 442 respectively connected to two ends of the pipe sleeve 42. The pipe sleeve 42 is sleeved on an outer side of the metal pipe section 251, the heat exchange channel 41 is formed between the pipe sleeve 42 and the metal pipe section 251, the channel inlet 411 is provided at the inlet joint 441, and the channel outlet 412 is provided at the outlet joint 442. The channel outlet 412 selectively connects to the wastewater outlet 413 to discharge the heating source or the cooling source.

The pipe sleeve 42 is sleeved on the outer side of the metal pipe section 251 of the beverage distribution pipeline 25 to form the heat exchange channel 41, so that the heat source or the cooling source in the heat exchange channel 41 may exchange heat with liquid in the metal pipe section 251. Due to the design of the heat exchange channel 41, when the beverage machine 100 is in operation, a beverage in the metal pipe section 251 exchanges heat with the external heat exchange channel 41 through the metal pipe section 251. This allows a temperature of the beverage to be quickly adjusted, thereby improving temperature control efficiency of a beverage. In addition, the inlet joint 441 and the outlet joint 442 are respectively disposed at the two ends of the pipe sleeve 42, and therefore, structure is simple, which allows for more convenient sealing between the pipe sleeve 42 and the metal pipe section 251.

Two ends of the metal pipe section 251 may pass through the inlet joint 441 and the outlet joint 442, respectively, thereby facilitating sealing of a space between the metal pipe section 251 and the pipe sleeve 42 through the inlet joint 441 and the outlet joint 442.

The metal pipe section 251 of the beverage distribution pipeline 25 is usually made of a metal material with good thermal conductivity, such as stainless steel, copper pipe or aluminum alloy, and these materials can ensure rapid heat transfer during a heat exchange process. When the heating source is hot water and flows through the heat exchange channel 41, liquid in the pipe sleeve 42 exchanges heat with liquid in the metal pipe section 251, so that a temperature of a beverage can be adjusted in time. When the heating source is steam and passes through the heat exchange channel 41, the steam may heat the metal pipe section 251. As a beverage flows through the metal pipe section 251, the beverage is heated, so that a temperature of the beverage can be adjusted in time. The provision of the metal pipe section 251 effectively improves heat efficiency of the beverage machine 100, thereby avoiding problems of uneven temperature distribution or insufficient heat exchange.

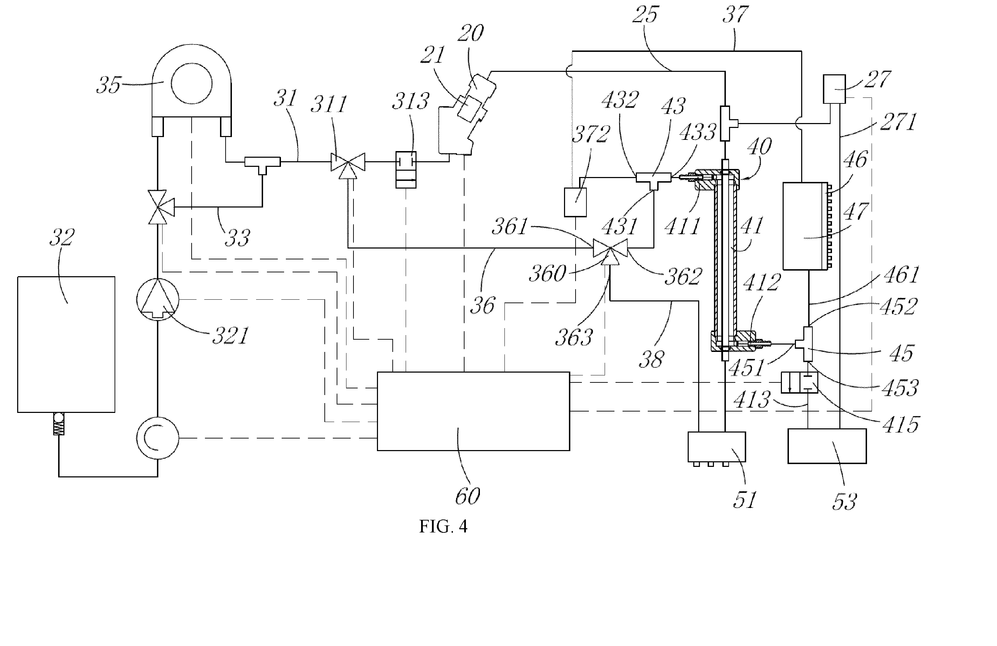

Referring to FIG. 4, the beverage machine 100 further includes a refrigeration module 46 and a cooling water tank 47, the cooling source is accommodated in the cooling water tank 47, the refrigeration module 46 is configured to cool the cooling water tank 47, the low-temperature pipeline 37 is connected between the cooling water tank 47 and the channel inlet 411, a return pipe 461 is provided between the cooling water tank 47 and the channel outlet 412, and the cooling source circulates between the heat exchange channel 41 and the cooling water tank 47 through the low-temperature pipeline 37 and the return pipe 461.

The refrigeration module 46 may cool the cooling source in the cooling water tank 47 by circulating the cooling source between the heat exchange channel 41 and the cooling water tank 47, so as to provide a cooling medium with a higher cooling effectiveness for the low-temperature pipeline 37. Specifically, the refrigeration module 46 may be a compressor-based cooling system or a thermoelectric cooling module or a semiconductor cooling module, and the refrigeration module 46 operates to reduce a temperature of the cooling source in the cooling water tank 47 to a required low temperature, so that a cooling medium at a lower temperature is provided for the low-temperature pipeline 37 during an operation of the beverage machine 100. The cooling source in the cooling water tank 47 may be water or other liquid. At the same time, the cooling source may also be recycled to reduce waste of the cooling source.

The cooling source in the cooling water tank 47 may flow to the heat exchange channel 41 under an action of the second water pump 372 on the low-temperature pipeline 37. The low-temperature pipeline 37 provides low-temperature water for the heat exchange channel 41 through the cooling water tank 47, so that the cooling source is provided for the heat exchanger 40 when a low-temperature beverage needs to be prepared. Before entering the low-temperature pipeline 37, liquid in the cooling water tank 47 is cooled by the refrigeration module 46, so as to ensure that low-temperature water entering the heat exchange channel 41 is kept within a set low-temperature range.

Capacity of the cooling water tank 47 and power of the refrigeration module 46 may be adjusted according to actual requirements, thereby ensuring stability and high efficiency of the heat exchanger 40. For example, the refrigeration module 46 may automatically adjust its operating power based on a change of a water temperature in the cooling water tank 47, so as to ensure that liquid in the cooling water tank 47 is always in an optimal temperature state.

In some embodiments, a second pipe joint 45 is provided at the channel outlet 412, the second pipe joint 45 includes a first input port 451, a first output port 452 and a second output port 453, the first input port 451 is connected to the channel outlet 412, the first output port 452 is connected to the return pipe 461, and the second output port 453 is connected to the wastewater outlet 413. A cutoff valve 415 is provided between the second output port 453 and the wastewater outlet 413, and when the heating source in the high-temperature pipeline 36 is introduced into the heat exchange channel 41, the cutoff valve 415 is opened to connect the second output port 453 to the wastewater outlet 413.

The second pipe joint 45 is configured to achieve efficient fluid recirculation and drainage in the beverage machine 100. This ensures that low-temperature water can be stably and efficiently recycled during a heat exchange process, and in a case where low-temperature water does not need to be continuously used or the heating source is introduced into the heat exchange channel 41, waste water can be smoothly discharged, thereby avoiding problems of temperature instability caused by water stagnation or mixing.

When liquid in the heat exchange channel 41 is used for high-temperature heating, the second output port 453 of the second pipe joint 45 is connected to the wastewater outlet 413, so that the heating source in the heat exchange channel 41 is discharged through the wastewater outlet 413. Specifically, during a heat exchange process, any wastewater that cannot be used for the next round of heat exchange enters the wastewater outlet 413 through the second output port 453 and is finally discharged into the water-receiving tray 53. When the heating source heated by the heater 35 needs to be introduced, the controller 60 automatically controls the cutoff valve 415 to be opened, so that the heating source entering the heat exchange channel 41 may smoothly flow out through the wastewater outlet 413. On the contrary, when the heating source no longer needs heat exchange, the cutoff valve 415 is closed, thereby preventing the heating source from flowing out through the wastewater outlet 413.

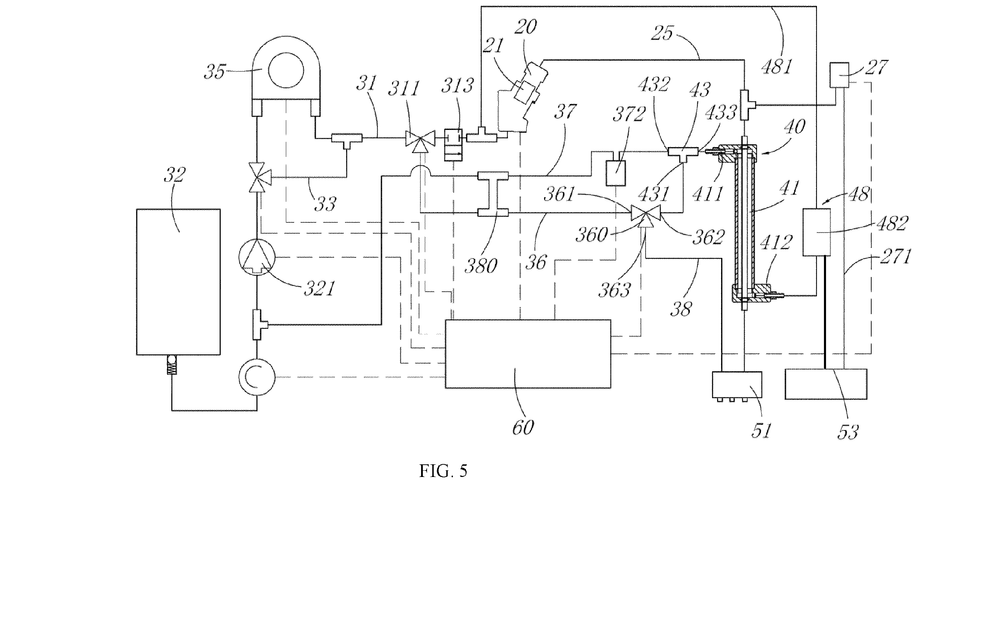

Referring to FIG. 5, in some embodiments, a circulation water loop 48 is provided between the channel outlet 412 and the brewer 20, and the controller 60, in response to a cleaning signal, delivers the heating source or the cooling source in the heat exchange channel 41 into the brewing water supply pipeline 31 through the circulation water loop 48.

The circulation water loop 48 may provide a storage space for liquid flowing out of the heat exchange channel 41, so that the liquid can be guided into the brewing chamber 21 as needed for cleaning the brewing chamber 21, thereby avoiding waste of water resources. The circulation water loop 48 includes a circulation pipe 481, and the circulation pipe 481 is connected between the channel outlet 412 and the brewing water supply pipeline 31, so as to deliver the heating source or the cooling source in the heat exchange channel 41 into the brewer 20, thereby achieving the cleaning of the brewer 20. The heating source or the cooling source rinsing the brewing chamber 21 may be discharged through a pressure relief valve 313, and the liquid in the brewer 20 may be quickly discharged through the pressure relief valve 313, which does not affect beverage preparation efficiency.

In some embodiments, the cleaning signal may be a signal characterizing that outputting of a brewing beverage in the brewing chamber 21 has been completely, and therefore, when a beverage is finished being prepared, the brewer 20 may be cleaned in time, so as to ensure sanitation of the brewer 20, and avoid sanitation problems caused by residual liquid in the heat exchange channel 41 and the circulation water loop 48. Certainly, the cleaning signal may also be a command signal manually initiated by users.

Further, the low-temperature pipeline 37 is connected between the water supply 32 and the channel inlet 411, the low-temperature pipeline 37 is provided with a second water pump 372, the controller 60 selectively controls disconnection between the second water pump 372 and the water supply 32, and controls the second water pump 372 to pressurize the heat exchange channel 41.

When the low-temperature pipeline 37 is connected to an external environment, a pressure existing in the low-temperature pipeline 37 prevents the second water pump 372 from drawing in water in the low-temperature pipeline 37 during operation. This allows the second water pump 372 to provide a driving force for fluid delivery from the heat exchange channel 41 to the circulation water loop 48, thereby eliminating the need for an additional pressurization device on the circulation water loop 48. Consequently, pipeline configuration is simplified, thereby reducing cost of the beverage machine 100.

Specifically, when the second water pump 372 is required to provide the driving force for the fluid delivery from the heat exchange channel 41 to the circulation water loop 48, the high-temperature pipeline 36 is controlled to be connected to the low-temperature pipeline 37, the first three-way valve 360 on the high-temperature pipeline 36 cuts off the first outlet 362 and connects the first inlet 361 to the second outlet 363, and the second water pump 372 is connected to an external environment through the beverage dispensing outlet 51 or the independent hot water outlet, thereby pressurizing the heat exchange channel 41. This allows the heating source or the cooling source in the heat exchange channel 41 to flow and enter the circulation water loop 48, and finally be delivered into the brewing chamber 21, so that rinsing of the brewing chamber 21 is realized, thereby avoiding waste caused by direct discharge of the heating source or the cooling source after heat exchange. In some embodiments, the high-temperature pipeline 36 and the low-temperature pipeline 37 may be connected through a four-way connector 380, and therefore, a structure is simple and cost is relatively low.

A temperature of the heating source or the cooling source delivered into the brewer 20 through the circulation water loop 48 is different from a temperature of the heating source or the cooling source directly delivered into the heat exchange channel 41. This is because the heating source or the cooling source delivered into the brewer 20 has already been used to heat or cool a beverage, resulting in a corresponding decrease or increase in temperature.

Of course, connection between the high-temperature pipeline 36 and the low-temperature pipeline 37 may also be achieved in other manners. For example, a four-way valve is provided between the high-temperature pipeline 36 and the low-temperature pipeline 37; or the high-temperature pipeline 36 and the low-temperature pipeline 37 are respectively provided with a three-way joint, and the two three-way joints are connected by a pipeline. In this way, by controlling disconnection between the high-temperature pipeline 36 and the brewing water supply pipeline 31, and disconnection between the low-temperature pipeline 37 and the water supply 32, connection between the high-temperature pipeline 36 and the low-temperature pipeline 37 may be achieved.

Referring further to FIG. 5, the circulation water loop 48 includes a circulation pipe 481 and a water storage tank 482 connected in series to the circulation pipe 481, and water discharged from the heat exchange channel 41 is stored in the water storage tank 482. The water storage tank 482 is configured to store the heating source or the cooling source discharged from the heat exchange channel 41, and these heating or cooling sources are temporarily stored for subsequent cleaning of the brewer 20, thereby avoiding liquid waste. When the heating source is hot water, the water storage tank 482 stores hot water that has been used to heat a beverage. When the heating source is steam, the water storage tank 482 generally does not store liquid. This is because when the steam is used as the heating source to heat a beverage, only a small amount of liquid (typically just a few drops) remains after the steam condenses. Therefore, the heating source supplied into the brewer 20 through the circulation water loop 48 is generally hot water. When the cooling source is low-temperature water, the water storage tank 482 stores low-temperature water that has been used to cool a beverage.

Capacity of the water storage tank 482 may be designed according to requirements of the beverage machine 100, so that the water storage tank 482 can store the heating source or the cooling source discharged from the heat exchange channel 41 during a heat exchange process, thereby allowing for secondary use of the heating source or the cooling source after heat exchange. Of course, the water storage tank 482 may be equipped with an automatic discharge device. When liquid stored in the water storage tank 482 is too much or water stored in the water storage tank 482 is used for cleaning pipelines, the controller 60 may control the automatic discharge device to discharge the liquid or water from the wastewater outlet 413 to the water-receiving tray 53.

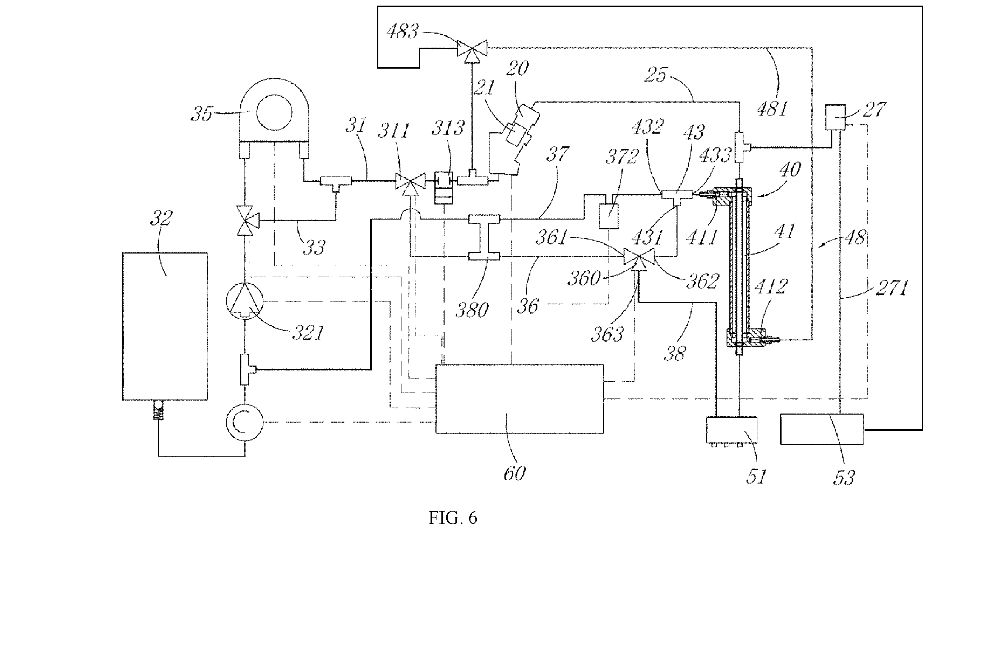

Referring to FIG. 6, in some other embodiments, the circulation water loop 48 includes a circulation pipe 481. An end of the circulation pipe 481 is connected to the channel outlet 412, and another end of the circulation pipe 481 is connected to the brewing water supply pipeline 31. The circulation pipe 481 is provided with a second three-way valve 483, a port of the second three-way valve 483 is connected to the wastewater outlet 413, and the second three-way valve 483 selectively connects the circulation water loop 48 to either the brewing water supply pipeline 31 or the wastewater outlet 413. Before cleaning of the brewer 20, the heating source or the cooling source in the circulation water loop 48 may be discharged from the wastewater outlet 413. During cleaning of the brewer 20, the heating source or the cooling source in the circulation water loop 48 may be delivered into the brewer 20 through the brewing water supply pipeline 31.

A volume of the brewing chamber 21 is relatively small, and therefore, the heating source or the cooling source in the heat exchange channel 41 and the circulation water loop 48 may fully achieve cleaning of the brewer 20. Therefore, there is no need to provide an additional container to accommodate the heating source or the cooling source in the heat exchange channel 41, which may not only reduce waste of water resources, but also reduce a volume and cost of the beverage machine 100.

In some embodiments, the adjustment signal characterizing the output beverage temperature includes a heating signal and a cooling signal. Corresponding to the heating signal, before brewing of a beverage, the controller 60 controls the heating source from the heater 35 to flow towards the brewing chamber 21 through the high-temperature pipeline 36, the heat exchange channel 41 and the circulation water loop 48. Corresponding to the cooling signal, before brewing of a beverage, the controller 60 controls the cooling source from the low-temperature pipeline 37 to flow towards the brewing chamber 21 through the heat exchange channel 41 and the circulation water loop 48. Before brewing of a beverage, the heating signal indicates that pipelines need to be preheated, and the cooling signal indicates that pipelines need to be precooled.

During brewing of a beverage, the heating signal indicates that a beverage output from the beverage distribution pipeline 25 needs to be heated, and the controller 60 controls the heating source from the heater 35 to flow through the high temperature line 36 and the heat exchange channel 41 for heat exchange with the beverage distribution pipeline 25, thereby increasing a temperature of a beverage to reach a desired high-temperature state; and the cooling signal indicates that a beverage output from the beverage distribution pipeline 25 needs to be cooled, and the controller 60 controls the cooling source from the low-temperature pipeline 37 to pass through the heat exchange channel 41, so as to reduce a temperature of a beverage, thereby providing a low-temperature beverage for users.

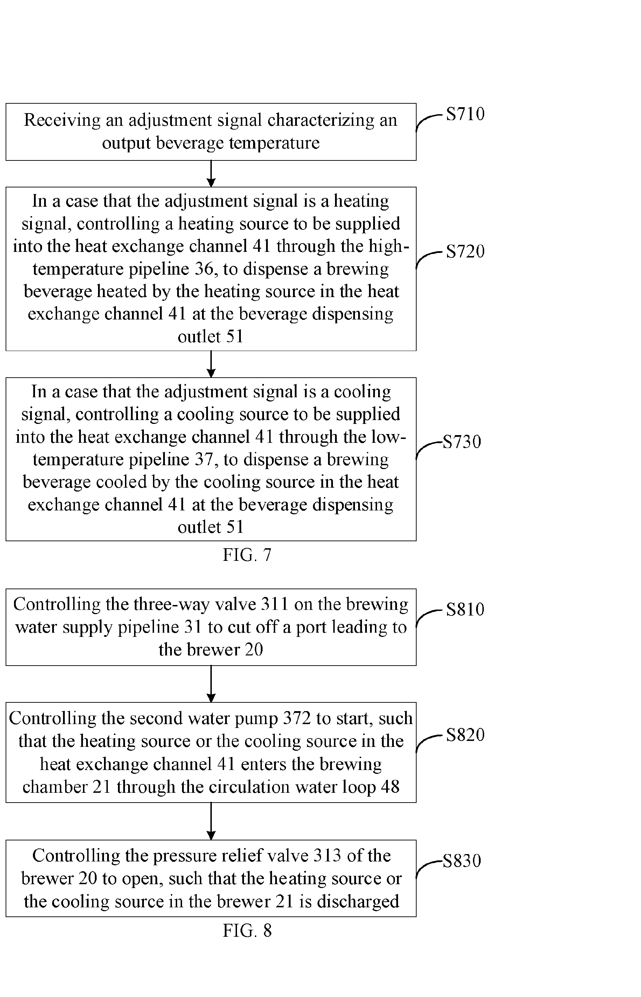

Referring to FIG. 7, the present invention also relates to a method for brewing a beverage using the beverage machine 100, which is executed by the controller 60. The method includes the following steps:
S710, receiving an adjustment signal characterizing an output beverage temperature;
S720, in a case that the adjustment signal is a heating signal, controlling a heating source to be supplied into the heat exchange channel 41 through the high-temperature pipeline 36, to dispense a brewing beverage heated by the heating source in the heat exchange channel 41 at the beverage dispensing outlet 51; and
S730, in a case that the adjustment signal is a cooling signal, controlling a cooling source to be supplied into the heat exchange channel 41 through the low-temperature pipeline 37, to dispense a brewing beverage cooled by the cooling source in the heat exchange channel 41 at the beverage dispensing outlet 51.

Before the execution of the step S720 and/or the step S730, or after the completion of the step S720 and/or the step S730, or simultaneously with the execution of the step S720 and/or the step S730, the method further includes: controlling brewing water from a water supply 32 to be supplied into the brewing chamber 21 through the brewing water supply pipeline 31, to prepare a brewing beverage in the brewing chamber 21; and controlling the brewing beverage to be delivered to the beverage dispensing outlet 51 through the beverage distribution pipeline 25. The heat exchange passage 41 surrounds the beverage distribution pipeline 25, and the beverage distribution pipeline 25 is fluidly isolated from but thermally in contact with the heat exchange channel 41.

With reference to FIG. 1 and FIG. 4 to FIG. 6, the controller 60 receives the heating signal, which indicates that a beverage needs to be heated to a relatively high temperature during brewing of a beverage. In this case, the controller 60 controls the first water pump 321 and the heater 35 to start, and controls the first three-way valve 360 on the high-temperature pipeline 36 to connect the brewing water supply pipeline 31 to the high-temperature pipeline 36, i.e., the first three-way valve 360 connects the first inlet 361 to the first outlet 362, thereby allowing the heated heating source to be supplied into the heat exchange channel 41 through the high-temperature pipeline 36. During this process, a beverage brewed by the brewer 20 is output through the beverage distribution pipeline 25, and the heating source from the heater 35 flows towards the heat exchange channel 41 through the high-temperature pipeline 36 and exchanges heat with a beverage in the beverage distribution pipeline 25, so as to transfer heat to the beverage, thereby allowing the beverage to reach a required high-temperature level. This ensures that a hot beverage can reach a target temperature in a short period of time, thereby improving heating efficiency and ensuring that a temperature of a brewing beverage meets high-temperature requirements.

In some embodiments, the heating source from the heater 35 is first delivered into the heat exchange channel 41 through the high-temperature pipeline 36, and then hot water from the heater 35 is supplied into the brewing chamber 21 through the brewing water supply pipeline 31, that is, the heating source supplied into the heat exchange channel 41 and the hot water supplied into the brewing chamber 21 are heated by a same heater 35.

In some other embodiments, an additional water pump and an additional heater may be provided, in conjunction with the first water pump 321 and the heater 35, to respectively provide the heating source for the heat exchange channel 41 and the hot water for the brewing chamber 21, so that the heating source provided for the heat exchange channel 41 may be steam or hot water.

The controller 60 receives the cooling signal, which indicates that a beverage needs to be maintained at a relatively low temperature during brewing of a beverage. In this case, the controller 60 controls the second water pump 372 to start, and the cooling source is delivered into the heat exchange channel 41 from either the water supply 32 or the cooling water tank 47 through the second water pump 372, so as to exchange heat with beverage liquid to remove excess heat, thereby achieving a cooling function. Specifically, the cooling source enters the heat exchange channel 41 through the low-temperature pipeline 37, and the cooling source in the heat exchange channel 41 exchanges heat with liquid in the beverage distribution pipeline 25, so as to ensure that a temperature of a beverage drops to a target temperature. During this process, a temperature control precision of a low-temperature beverage is ensured, thereby avoiding problems of affecting taste of a beverage due to excessively high temperatures.

In addition, with reference to FIG. 5 and FIG. 6, when the controller 60 receives the heating signal or the cooling signal, before brewing of a beverage, the heat exchanger 40 may also be used for preheating or precooling pipelines, thereby further ensuring that the output beverage temperature can meet requirements of users.

In this way, the beverage machine 100 can quickly adjust a temperature according to requirements, so as to ensure that each cup of a beverage is drunk by users within an ideal temperature range after brewing of the beverage.

In some embodiments, the heating signal is triggered by at least one of following features:
preparation of a first cup of a high-temperature beverage after startup of the beverage machine 100 when an ambient temperature is below a preset ambient temperature;
exceeding a preset time period after output of a previous cup of a high-temperature beverage;
preparation of a first cup of a high-temperature beverage following output of a cold-extracted beverage; and
a temperature of a beverage brewed by the brewing chamber 21 being below a target temperature required for a high-temperature beverage.

In some embodiments, the cooling signal is triggered by at least one of following features:
current preparation of a low-temperature beverage;
preparation of a first cup of a cold-extracted beverage following output of a high-temperature beverage; and
a temperature of a beverage brewed by the brewing chamber 21 being above a target temperature required for a cold-extracted beverage.

A low-temperature beverage is a beverage which is formed by extracting at a high temperature and then cooling with cold water, and has a relatively low temperature. A cold-extracted beverage is a beverage which is directly formed by extracting with normal-temperature water, and has a relatively low temperature. In normal circumstances, a cold-extracted beverage extracted with normal-temperature water does not require additional cooling with cold water. However, if a previous cup of a beverage is a high-temperature beverage and a current cup of a cold-extracted beverage is extracted with normal-temperature water, a temperature in the brewer 20 is relatively high, and therefore, cooling needs to be performed again. In other words, the cooling signal is triggered only when a low-temperature beverage is prepared, or when a cold-extracted beverage is prepared after a high-temperature beverage has been output.

The above-mentioned trigger conditions may be set by an internal program of the beverage machine 100. For example, when an ambient temperature is set to 15°C, and a first cup of a high-temperature beverage is prepared after startup of the beverage machine 100, the heating source may be delivered into the heat exchanger 40 through the high-temperature pipeline 36 for heating a beverage in the beverage distribution pipeline 25, so as to ensure that the first cup of the output high-temperature beverage reaches a target temperature.

When the beverage machine 100 has not been used for more than a preset time period (e.g., 30 minutes) after a previous cup of a high-temperature beverage has been output, or when a current prepared beverage is a first cup of a high-temperature beverage after a cold-extracted beverage has been output, or when a temperature sensor detects that a temperature of a beverage output by the brewer 20 is below a preset target temperature required for a high-temperature beverage, or in other situations where it is necessary to increase the output beverage temperature, the heating source may be delivered into the heat exchanger 40 through the high-temperature pipeline 36 for heating a beverage in the beverage distribution pipeline 25, so as to ensure that an output high-temperature beverage reaches a target temperature.

In addition, when a current prepared beverage is a first cup of a cold-extracted beverage after a previous cup of a high-temperature beverage has been output, that is, when a beverage preparation instruction currently received indicates that a cold-extracted beverage needs to be prepared after a previous cup of a high-temperature beverage has been output, or when a temperature sensor detects that a temperature of a beverage output by the brewer 20 is greater than a preset target temperature required for a cold-extracted beverage, the cooling source passing through the low-temperature pipeline 37 is supplied into the heat exchange channel 41 for cooling a beverage in the beverage distribution pipeline 25, so as to ensure that an output cold-extracted beverage reaches a target temperature.

In some embodiments, the controlling the heating source to be supplied into the heat exchange channel 41 through the high-temperature pipeline 36 includes:
controlling the first water pump 321 upstream of the heater 35 to start, to supply water into the heater 35;
controlling the heater 35 to heat the water, to form the heating source; and
controlling disconnection of a flow path from the brewing water supply pipeline 31 to the brewer 20, and controlling the first three-way valve 360 on the high-temperature pipeline 36 to open a port leading to the channel inlet 411, such that the heating source enters the heat exchange channel 41.

Referring to FIG. 1 and FIG. 4 to FIG. 6, when the controller 60 receives the heating signal, the controller 60 controls the first water pump 321 upstream of the heater 35 to start, so as to ensure that water from the water supply 32 can smoothly enter the heater 35, and the water in the heater 35 is converted into the heating source in a form of hot water or steam. A temperature sensor of the heater 35 may monitor a temperature of the water in real time, so as to ensure that the water is heated to a desired target temperature range. The heated hot water or steam is then delivered into the heat exchange channel 41 through the high-temperature pipeline 36. After the steam enters the heat exchange channel 41 through the high-temperature pipeline 36, the steam quickly transfers heat to the beverage distribution pipeline 25, so as to heat or preheat the beverage distribution pipeline 25, thereby ensuring that a beverage can be heated to a target temperature. During a heating process, the controller 60 accurately controls heating time and a heating temperature by adjusting heating power of the heater 35, so that hot water or steam can quickly and uniformly reach a required temperature, thereby achieving a best heat exchange effect and best beverage temperature control. Adopting this precise control system not only ensures temperature stability of a beverage, but also effectively improves efficiency and taste of beverage preparation.

In some embodiments, the controlling the cooling source to be supplied to the heat exchange channel 41 through the low-temperature pipeline 37 includes:
controlling the first three-way valve 360 on the high-temperature pipeline 36 to cut off a port leading to the heat exchange channel 41; and
controlling the second water pump 372 on the low-temperature pipeline 37 to start, such that low-temperature water from the water supply 32 enters the heat exchange channel 41 through the low-temperature pipeline 37.

The low-temperature water from the water supply 32 is the cooling source.

Referring to FIG. 1, FIG. 5 and FIG. 6, when the cooling source is provided for the heat exchange channel 41, the controller 60 controls the first three-way valve 360 to cut off the first inlet 361 and the first outlet 362, so as to ensure that the heating source from the high-temperature pipeline 36 to the heat exchange channel 41 is blocked, and the controller 60 controls the cooling source to enter the heat exchange channel 41 through the low-temperature pipeline 37, so as to cool or precool the beverage distribution pipeline 25, thereby ensuring that a beverage can be cooled to a target temperature. In this case, a function of the first three-way valve 360 is to prevent the heating source from flowing into the heat exchange channel 41, so as to ensure that the cooling source is introduced into the heat exchange channel 41, thereby avoiding temperature control instability caused by mixing of a cooling source and a heating source.

In some other embodiments, the controlling the cooling source to be supplied into the heat exchange channel 41 through the low-temperature pipeline 37 includes:
controlling the first three-way valve 360 on the high-temperature pipeline 36 to cut off a port leading to the heat exchange channel 41; and
controlling the second water pump 372 on the low-temperature pipeline 37 to start, such that the cooling source circulates between the heat exchange channel 41 and the cooling water tank 47 through the low-temperature pipeline 37, the cooling water tank 47 being connected to the channel outlet 412.

When a temperature of the cooling source in the cooling water tank 47 is below a preset temperature, the refrigeration module 46 is controlled to cool the cooling water tank 47.

Referring to FIG. 4, when the cooling source is provided for the beverage machine 100, the controller 60 controls the first three-way valve 360 to cut off the first inlet 361 and the first outlet 362, so that water flow from the high-temperature pipeline 36 to the heat exchange channel 41 is blocked, and the controller 60 controls the cooling source refrigerated by the refrigeration module 46 to enter the heat exchange channel 41 through the low-temperature pipeline 37, so that the beverage distribution pipeline 25 exchanges heat with the cooling source, thereby improving heat exchange efficiency.

Referring to FIG. 8, in the above method, after the brewing beverage is dispensed at the beverage dispensing outlet 51, the method for brewing the beverage further includes:
S810, controlling the three-way valve 311 on the brewing water supply pipeline 31 to cut off a port leading to the brewer 20;
S820, controlling the second water pump 372 to start, such that the heating source or the cooling source in the heat exchange channel 41 enters the brewing chamber 21 through the circulation water loop 48; and
S830, controlling the pressure relief valve 313 of the brewer 20 to open, such that the heating source or the cooling source in the brewer 21 is discharged.

With reference to FIG. 5 and FIG. 6, after the brewing beverage is completed and reaches a target temperature, the controller 60 cuts off hot water supply from the heater 35, so as to prevent hot water from continuing to enter the brewing chamber 21. Meanwhile, the controller 60 controls the second water pump 372 to start, such that the heating source or the cooling source in the heat exchange channel 41 is sent back to the brewing chamber 21 through the circulation water loop 48, so as to complete cleaning of the brewing chamber 21. The heating source or the cooling source rinsing the brewing chamber 21 may be discharged through the pressure relief valve 313. During this process, the heating source or the cooling source in the heat exchange channel 41 can be utilized, so as to avoid waste of water resources, and ensure cleaning of the brewing chamber 21, thereby preparing for the next use.

In some embodiments, the controlling the second water pump 372 to start, such that the heating source or the cooling source in the heat exchange channel 41 enters the brewing chamber 21 through the circulation water loop 48 includes:
controlling the first three-way valve 360 on the high-temperature pipeline 36 to cut off a port leading to the heat exchange channel 41, and controlling the first three-way valve 360 on the high-temperature pipeline 36 to open a port leading to the beverage dispensing outlet 51 or the independent hot water outlet, the high-temperature pipeline 36 being connected to the low-temperature pipeline 37;
controlling disconnection between the low-temperature pipeline 37 and the water supply 32, and controlling disconnection between the high-temperature pipeline 36 and the brewing water supply pipeline 31; and
controlling the second water pump 372 to start, to pressurize the heat exchange channel 41, such that the heating source or the cooling source in the heat exchange channel 41 enters the brewing chamber 21 through the circulation water loop 48.

Referring to FIG. 5 and FIG. 6, the high-temperature pipeline 36 and the low-temperature pipeline 37 may be connected through the four-way connector 380, and the second water pump 372 is connected to an external environment through the beverage dispensing outlet 51 to pressurize the heat exchange channel 41, so that the heating source or the cooling source in the heat exchange channel 41 flows and enters the circulation water loop 48 and is finally delivered into the brewing chamber 21, thereby realizing rinsing of the brewing chamber 21, and avoiding waste caused by direct discharge of the heating source or the cooling source after heat exchange.

In some other embodiments, the high-temperature pipeline 36 and the low-temperature pipeline 37 may also be controlled to be disconnected from the upstream brewing water supply pipeline 31 and the upstream water supply 32, respectively, so that the high-temperature pipeline 36 is connected to the low-temperature pipeline 37, thereby allowing the second water pump 372 to pressurize the heat exchange channel 41 more stably and efficiently.

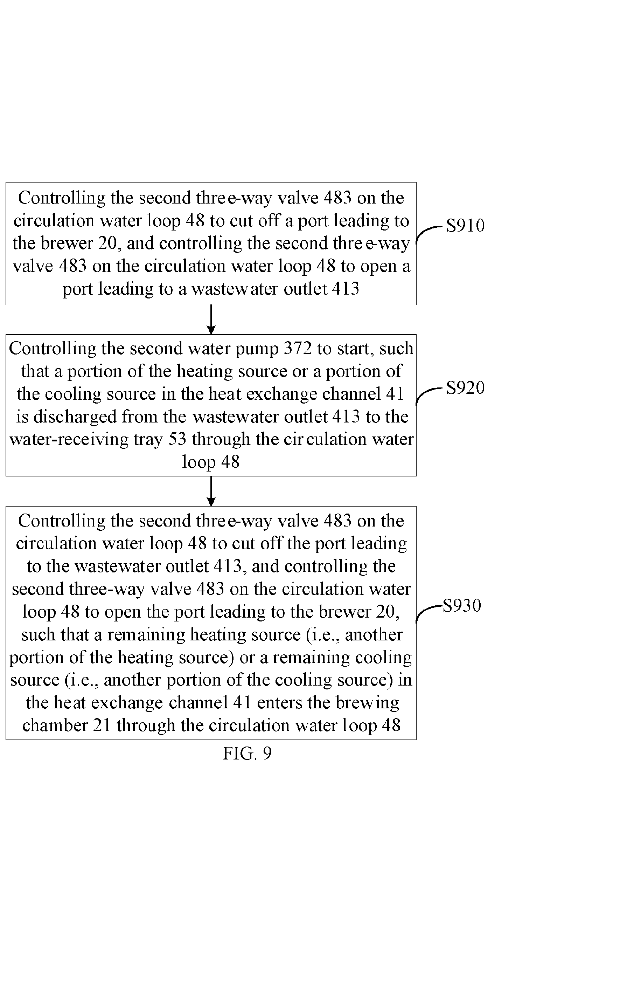

With reference to FIG. 9, in some embodiments, the controlling the second water pump 372 to start, such that the heating source or the cooling source in the heat exchange channel 41 enters the brewing chamber 21 through the circulation water loop 48 includes:
S910, controlling the second three-way valve 483 on the circulation water loop 48 to cut off a port leading to the brewer 20, and controlling the second three-way valve 483 on the circulation water loop 48 to open a port leading to a wastewater outlet 413;
S920, controlling the second water pump 372 to start, such that a portion of the heating source or a portion of the cooling source in the heat exchange channel 41 is discharged from the wastewater outlet 413 to the water-receiving tray 53 through the circulation water loop 48; and
S930, controlling the second three-way valve 483 on the circulation water loop 48 to cut off the port leading to the wastewater outlet 413, and controlling the second three-way valve 483 on the circulation water loop 48 to open the port leading to the brewer 20, such that a remaining heating source (i.e., another portion of the heating source) or a remaining cooling source (i.e., another portion of the cooling source) in the heat exchange channel 41 enters the brewing chamber 21 through the circulation water loop 48.

With reference to FIG. 6, water used for heat exchange may be stored in the circulation water loop 48, and before a beverage in the brewer 20 is output, any excess heating source or any excess cooling source in the circulation water loop 48 may be discharged from the wastewater outlet 413 to the water-receiving tray 53 without providing an additional container to store water passing through the heat exchange channel 41, thereby reducing a volume and cost of the beverage machine 100.

In some embodiments, before brewing water from the water supply 32 is supplied into the brewing chamber 21 through the brewing water supply pipeline 31, the method for brewing the beverage further includes:
controlling the heating source in the heat exchange channel 41 to enter the brewing chamber 21 through the circulation water loop 48; and
controlling the pressure relief valve 313 of the brewer 20 to open, to discharge the heating source in the brewing chamber 21.

With reference to FIG. 5 and FIG. 6, before brewing of a beverage, the heating source heated by the heater 35 is delivered into the brewing chamber 21 through the high-temperature pipeline 36, the heat exchange channel 41 and the circulation pipe 481, so as to preheat the heat exchange channel 41 and the brewing chamber 21, thereby avoiding a situation where a relatively low temperature in the brewer 20 affects a temperature of a high-temperature beverage to be brewed next.

In other words, in the above method, supplying the heating source, which is heated by the heater 35, into the heat exchange channel 41 through the high-temperature pipeline 36 may be used for preheating the brewer 20 before brewing of a beverage, or may be used for heating a beverage in the beverage distribution pipeline 25 during brewing of a beverage.

In some embodiments, before brewing water from the water supply 32 is supplied into the brewing chamber 21 through the brewing water supply pipeline 31, the method for brewing the beverage further includes:
controlling the second water pump 372 on the low-temperature pipeline 37 to start, such that the cooling source entering the heat exchange channel 41 enters the brewing chamber 21 through the circulation water loop 48; and
controlling the pressure relief valve 313 of the brewer 20 to open, to discharge the cooling source in the brewing chamber 21.

With reference to FIG. 5 and FIG. 6, before brewing of a beverage, low-temperature water from the water supply 32 is delivered into the brewing chamber 21 through the low-temperature pipeline 37, the heat exchange channel 41 and the circulation pipe 481, so as to precool the heat exchange channel 41 and the brewing chamber 21, thereby avoiding a situation where a relatively high temperature in the brewer 20 affects a temperature of a cold-extracted beverage to be brewed next.

In other words, in the above method, supplying the cooling source, which passes through the low-temperature pipeline 37, into the heat exchange channel 41 may be used for precooling the brewer 20 before brewing of a beverage, or may be used for cooling a beverage in the beverage distribution pipeline 25 during brewing of a beverage.

In the above-mentioned beverage machine 100 and the method for brewing the beverage, the efficient heat exchanger 40 is introduced, thereby enabling the beverage machine 100 to achieve more accurate temperature control and more efficient heat exchange during a heating and cooling process. This ensures that each brewed beverage reaches a set ideal temperature. Additionally, waste of water resources is reduced by reusing the heating source or the cooling source.

It should be understood that, although the specification is described in terms of embodiments, but not every embodiment includes only one independent technical solution. Such description of the specification is merely for clarity, a person skilled in the art should use the specification as a whole, and the technical solutions in the embodiments may also be appropriately combined to form other embodiments that may be understood by a person skilled in the art.

The above-listed series of detailed descriptions are merely specific illustrations of feasible embodiments of the present invention. They are not intended to limit the protection scope of the present invention, and any equivalent embodiments or changes made without departing from the technical spirit of the present invention shall fall within the protection scope of the present invention.

## Claims

1. A beverage machine (100), **characterized by** comprising:
a beverage distribution pipeline (25) connected between a beverage dispensing outlet (51) and a brewing chamber (21) of a brewer (20) for preparing a brewing beverage, for delivering the brewing beverage to the beverage dispensing outlet (51);
a heat exchanger (40), the heat exchanger (40) being provided with a heat exchange channel (41), a portion of the beverage distribution pipeline (25) passing through the heat exchanger (40), the heat exchange channel (41) surrounding the portion of the beverage distribution pipeline (25), the portion of the beverage distribution pipeline (25) being fluidly isolated from but thermally in contact with the heat exchange channel (41), the heat exchange channel (41) being provided with a channel inlet (411) and a channel outlet (412), and the channel inlet (411) being connected to a first pipeline (36) and a second pipeline (37); and
a controller (60), wherein the controller (60), in response to an adjustment signal characterizing an output beverage temperature, controls selective connection between the channel inlet (411) and either the first pipeline (36) or the second pipeline (37), thereby enabling the heat exchange channel (41) to selectively introduce either a heating source through the first pipeline (36) or a cooling source through the second pipeline (37), to dispense the brewing beverage heated by the heating source in the heat exchange channel (41) or the brewing beverage cooled by the cooling source in the heat exchange channel (41) at the beverage dispensing outlet (51).

2. The beverage machine (100) according to claim 1, further comprising a heater (35) connected to a water supply (32),
wherein an end of the first pipeline (36) is connected to the heater (35), and another end of the first pipeline (36) is connected to the channel inlet (411); water from the water supply (32) is delivered into the heater (35) for heating, and heated water is delivered as the heating source into the heat exchange channel (41) through the first pipeline (36);
preferably, a first water pump (321) is provided between the water supply (32) and the heater (35), and the first water pump (321) is configured to supply the water into the heater (35).

3. The beverage machine (100) according to claim 2, further comprising a brewing water supply pipeline (31) connected to the brewer (20) and leading to the brewing chamber (21), for supplying brewing water to the brewing chamber (21),
wherein the heater (35) is connected between the water supply (32) and the brewing water supply pipeline (31), and the end of the first pipeline (36) is connected to the heater (35) through the brewing water supply pipeline (31); and the first pipeline (36) is provided with a first three-way valve (360), the first three-way valve (360) comprises a first inlet (361), a first outlet (362) and a second outlet (363), the first inlet (361) is connected to the brewing water supply pipeline (31), the first outlet (362) is connected to the channel inlet (411), the second outlet (363) is connected to either the beverage dispensing outlet (51) or an independent hot water outlet, and the first inlet (361) is selectively connected to either the first outlet (362) or the second outlet (363).

4. The beverage machine (100) according to any one of claims 1 to 3, wherein the second pipeline (37) is connected between a water supply (32) and the channel inlet (411), water from the water supply (32) is delivered as the cooling source into the heat exchange channel (41) through the second pipeline (37);
preferably, the second pipeline (37) is provided with a second water pump (372), and the second water pump (372) is configured to supply the water into or pressurize the heat exchange channel (41).

5. The beverage machine (100) according to any one of claims 1 to 3, further comprising a refrigeration module (46) and a cooling water tank (47),
wherein the cooling source is accommodated in the cooling water tank (47), the refrigeration module (46) is configured to cool the cooling water tank (47), the second pipeline (37) is provided with a second water pump (372), the second pipeline (37) is connected between the cooling water tank (47) and the channel inlet (411), a return pipe (461) is provided between the cooling water tank (47) and the channel outlet (412), and the cooling source, under an action of the second water pump (372), circulates between the heat exchange channel (41) and the cooling water tank (47) through the second pipeline (37) and the return pipe (461);
preferably, a second pipe joint (45) is provided between the channel outlet (412) and the cooling water tank (47), the second pipe joint (45) comprises a first input port (451), a first output port (452) and a second output port (453), the first input port (451) is connected to the channel outlet (412), the first output port (452) is connected to the return pipe (461), and the second output port (453) is connected to a wastewater outlet (413); and a cutoff valve (415) is provided between the second output port (453) and the wastewater outlet (413), and when the heating source in the first pipeline (36) is introduced into the heat exchange channel (41), the cutoff valve (415) opens to connect the second output port (453) to the wastewater outlet (413).

6. The beverage machine (100) according to any one of claims 1 to 4, further comprising a brewing water supply pipeline (31) connected to the brewer (20) and leading to the brewing chamber (21), for supplying brewing water to the brewing chamber (21),
wherein a circulation water loop (48) is provided between the channel outlet (412) and the brewer (20), and the controller (60), in response to a cleaning signal, controls the heating source or the cooling source in the heat exchange channel (41) to be delivered into the brewing water supply pipeline (31) through the circulation water loop (48);
preferably, the second pipeline (37) is connected between a water supply (32) and the channel inlet (411), the second pipeline (37) is provided with a second water pump (372), the controller (60) selectively controls disconnection between the second water pump (372) and the water supply (32), and controls the second water pump (372) to pressurize the heat exchange channel (41).

7. The beverage machine (100) according to claim 6, wherein the circulation water loop (48) comprises a circulation pipe (481) and a water storage tank (482) connected in series to the circulation pipe (481), and the heating source or the cooling source discharged from the heat exchange channel (41) is stored in the water storage tank (482).

8. The beverage machine (100) according to claim 6, wherein the circulation water loop (48) comprises a circulation pipe (481), the circulation pipe (481) is provided with a second three-way valve (483), a first port and a second port of the second three-way valve (483) are connected to the channel outlet (412) and the brewing water supply pipeline (31), respectively, and a third port of the second three-way valve (483) is connected to a wastewater outlet (413); an end of the circulation pipe (481) is connected to the channel outlet (412), and another end of the circulation pipe (481) is connected to the brewing water supply pipeline (31); and the second three-way valve (483) selectively connects the circulation water loop (48) to either the brewing water supply pipeline (31) or the wastewater outlet (413).

9. The beverage machine (100) according to any one of claims 1 to 8, wherein the portion of the beverage distribution pipeline (25) passing through the heat exchanger (40) is constructed as a metal pipe section (251), the heat exchanger (40) comprises a pipe sleeve (42), and an inlet joint (441) and an outlet joint (442) respectively connected to two ends of the pipe sleeve (42), the pipe sleeve (42) is sleeved on an outer side of the metal pipe section (251), the heat exchange channel (41) is disposed between the pipe sleeve (42) and the metal pipe section (251), the channel inlet (411) is provided at the inlet joint (441), and the channel outlet (412) is provided at the outlet joint (442); and the channel outlet (412) selectively connects to a wastewater outlet (413), to discharge the heating source or the cooling source.

10. A method for brewing a beverage, applied to the beverage machine (100) according to claim 1, and **characterized by** comprising:
receiving (S710) an adjustment signal characterizing an output beverage temperature;
in a case that the adjustment signal is a heating signal, controlling (S720) a heating source to be supplied into the heat exchange channel (41) through the first pipeline (36), to dispense a brewing beverage heated by the heating source in the heat exchange channel (41) at the beverage dispensing outlet (51); and
in a case that the adjustment signal is a cooling signal, controlling (S730) a cooling source to be supplied into the heat exchange channel (41) through the second pipeline (37), to dispense a brewing beverage cooled by the cooling source in the heat exchange channel (41) at the beverage dispensing outlet (51).

11. The method for brewing the beverage according to claim 10, wherein
the heating signal is triggered by at least one of following features:
preparation of a first cup of a high-temperature beverage after startup of the beverage machine (100) when an ambient temperature is below a preset ambient temperature;
exceeding a preset time period after output of a previous cup of a high-temperature beverage;
preparation of a first cup of a high-temperature beverage following output of a cold-extracted beverage; and
a temperature of a beverage brewed by the brewing chamber (21) of the brewer (20) being below a target temperature required for a high-temperature beverage; and/or
the cooling signal is triggered by at least one of following features:
current preparation of a low-temperature beverage;
preparation of a first cup of a cold-extracted beverage following output of a high-temperature beverage; and
a temperature of a beverage brewed by the brewing chamber (21) of the brewer (20) being above a target temperature required for a cold-extracted beverage.

12. The method for brewing the beverage according to claim 10 or 11, wherein the controlling (S720) the heating source to be supplied into the heat exchange channel (41) through the first pipeline (36) comprises:
controlling a first water pump (321) upstream of a heater (35) to start, to supply water to the heater (35);
controlling the heater (35) to heat the water, to form the heating source; and
controlling a first three-way valve (360) on the first pipeline (36) to open a port leading to the heat exchange channel (41), such that the heating source enters the heat exchange channel (41).

13. The method for brewing the beverage according to any one of claims 10 to 12, wherein the controlling the cooling source to be supplied into the heat exchange channel (41) through the second pipeline (37) comprises:
controlling a first three-way valve (360) on the first pipeline (36) to cut off a port leading to the heat exchange channel (41); and
controlling a second water pump (372) on the second pipeline (37) to start, such that water serving as the cooling source from a water supply (32) or a cooling water tank (47) enters the heat exchange channel (41) through the second pipeline (37).

14. The method for brewing the beverage according to any one of claims 10 to 13, further comprising:
controlling (S810) a three-way valve (311) on a brewing water supply pipeline (31) to cut off a port leading to the brewer (20);
controlling (S820) a second water pump (372) to start, such that the heating source or the cooling source in the heat exchange channel (41) enters the brewing chamber (21) of the brewer (20) through a circulation water loop (48); and
controlling (S830) a pressure relief valve (313) of the brewer (20) to open, such that the heating source or the cooling source in the brewing chamber (21) is discharged,
wherein the controlling (S820) the second water pump (372) to start, such that the heating source or the cooling source in the heat exchange channel (41) enters the brewing chamber (21) of the brewer (20) through the circulation water loop (48) comprises:
controlling a first three-way valve (360) on the first pipeline (36) to cut off a port leading to the heat exchange channel (41), and controlling the first three-way valve (360) to open a port leading to either the beverage dispensing outlet (51) or an independent hot water outlet, the first pipeline (36) being connected to the second pipeline (37);
controlling disconnection between the second pipeline (37) and a water supply (32), and controlling disconnection between the first pipeline (36) and the brewing water supply pipeline (31); and
controlling the second water pump (372) to start, to pressurize the heat exchange channel (41), such that the heating source or the cooling source in the heat exchange channel (41) enters the brewing chamber (21) through the circulation water loop (48), or
the controlling (S820) the second water pump (372) to start, such that the heating source or the cooling source in the heat exchange channel (41) enters the brewing chamber (21) of the brewer (20) through the circulation water loop (48) comprises:
controlling (S910) a second three-way valve (483) on the circulation water loop (48) to cut off a port leading to the brewer (20), and controlling the second three-way valve (483) on the circulation water loop (48) to open a port leading to a wastewater outlet (413);
controlling (S920) the second water pump (372) to start, such that a portion of the heating source or a portion of the cooling source in the heat exchange channel (41) is discharged from the wastewater outlet (413) through the circulation water loop (48); and
controlling (S930) the second three-way valve (483) on the circulation water loop (48) to cut off the port leading to the wastewater outlet (413), and controlling the second three-way valve (483) on the circulation water loop (48) to open the port leading to the brewer (20), such that another portion of the heating source or another portion of the cooling source in the heat exchange channel (41) enters the brewing chamber (21) through the circulation water loop (48).

15. The method for brewing the beverage according to any one of claims 10 to 14, wherein
in the case that the adjustment signal is the heating signal, the method further comprises:
controlling the heating source in the heat exchange channel (41) to enter the brewing chamber (21) of the brewer (20) through a circulation water loop (48); and
controlling a pressure relief valve (313) of the brewer (20) to open, to discharge the heating source in the brewing chamber (21), and
in the case that the adjustment signal is the cooling signal, the method further comprises:
controlling a second water pump (372) on the second pipeline (37) to start, such that the cooling source entering the heat exchange channel (41) enters the brewing chamber (21) through a circulation water loop (48); and
controlling a pressure relief valve (313) of the brewer (20) to open, to discharge the cooling source in the brewing chamber (21).
